# FASCICULE DE BREVET EUROPEEN

(11) **EP 2 507 612 B1**
(45) Date de publication et mention de la délivrance du brevet: **17.08.2016**
(21) Numéro de dépôt: 10801612.2
(22) Date de dépôt: 30.11.2010
(51) Int. Cl.: G01N 3/42

(54) **DISPOSITIF D'INDENTATION CONTINUE OU INSTRUMENTÉE**
KONTINUIERLICHE ODER INSTRUMENTIERTE EINKERBUNGSVORRICHTUNG
CONTINUOUS OR INSTRUMENTED INDENTATION DEVICE

(30) Priorité: 30.11.2009 FR 0905737
(43) Date de publication de la demande: 10.10.2012
(73) Titulaire: Université de Rennes 1, 35065 Rennes (FR)
(72) Inventeur: MAUVOISIN, Gérard, 35135 Chantepie (FR)
(74) Mandataire: Wagret, Frédéric
(86) Numéro de dépôt international: PCT/FR2010/052571
(87) Numéro de publication internationale: WO 2011/064517

(56) Documents cités:
- EP-A2- 0 289 127
- WO-A1-03/073072
- WO-A1-2006/136038
- WO-A2-2008/156515
- DE-U1- 9 218 581
- DE-U1- 9 310 043
- DE-U1- 9 318 389
- DE-U1- 20 212 026
- FR-A1- 2 823 307
- JP-A- 2007 327 263
- US-A- 4 820 051
- US-A1- 2004 020 276

## Description

La présente invention concerne un nouveau dispositif portatif, dépourvu de bâti massif, permettant de réaliser une indentation instrumentée d'un matériau afin d'en déduire ses propriétés mécaniques. L'indentation continue ou instrumentée consiste à mesurer l'effort et le déplacement au cours de l'enfoncement d'un indenteur dans le matériau à tester.

L'étude d'antériorité n'a pas permis de trouver de dispositif proche de celui proposé dans le cadre de l'invention présentée ici. Notons qu'il existe un certain nombre d'équipements portables ou portatifs pour la mesure de la dureté, on peut citer les brevets N° FR7606798 (mesureur de dureté actionnable à la main), N° WO2006/136038 A1 ( Apparatus for Hardness Measurement by impact), N° WO03/056303 A1 (Hardness measuring device comprising a housing and a pénétration body, in particular a manuel device).

US 2004020276 A1, FR2823307 A1, DE9310043U U1 et WO03073072 A1 divulguent également des appareils d'indentation.

Le test d'indentation se distingue nettement du test de dureté qui consiste d'abord à appliquer, durant environ 10 sec, une charge (poids mort) sur un indenteur en contact avec la surface testée, puis à mesurer la taille de l'empreinte laissée à la surface du matériau après retrait de la charge.

Ainsi, bien que la dureté des matériaux peut être obtenue par indentation instrumentée, les durometres ne permettent pas d'atteindre les propriétés mécaniques qui peuvent être obtenues par indentation continue ou instrumentée.

L'indentation est un test intéressant pour les chercheurs et les industriels car il permet de caractériser mécaniquement un matériau rapidement et aux échelles nanométrique, micrométrique et macrométrique. Les dispositifs actuels permettent de réaliser des indentations continues ou instrumentées en enregistrant l'évolution de l'effort F en fonction de l'enfoncement h de l'indenteur dans le matériau. La courbe d'indentation notée F(h), incluant la phase de chargement puis de déchargement, dépend de nombreux paramètres expérimentaux ainsi que des propriétés mécaniques. Une fois les paramètres expérimentaux maîtrisés et fixés, la courbe d'indentation est caractéristique du matériau. Elle peut être exploitée pour déterminer les paramètres de la loi de comportement du matériau, habituellement obtenus par l'essai de traction, qui est destructif et qui nécessite un certain volume de matière pour la réalisation d'une éprouvette spécifique et normalisée. Au contraire, le test d'indentation est non destructif, il ne requiert qu'un petit volume de matière et ne nécessite pas d'éprouvette spécifique. L'essai d'indentation est un test très local qui peut être utilisé pour tester des couches très fines.

Nous avons nous même conçu et réalisé notre propre banc d'indentation après avoir constaté des problèmes de reproductibilité des résultats et des problèmes de fiabilité des machines du commerce. Nous avons constaté que les capteurs de déplacements sur les bancs d'essai du commerce intègrent à leurs mesures des déplacements dus aux déformations de certains éléments du banc d'essai. De plus, nous avons observé que les courbes expérimentales obtenues sur des matériaux métalliques, dont la loi de comportement a été obtenue par un test de traction, ne se superposaient pas aux courbes numériques obtenues par la méthode des éléments finis. On observe toujours des courbes expérimentales moins rigides que les courbes numériques, c'est à dire que pour un même effort le déplacement mesuré est toujours plus grand que celui donné par la méthode des éléments finis. C'est un constat que l'on peut faire sur tous les bancs d'essai du commerce que nous avons testés, quel que soit le matériau. On note deux sources d'erreur de mesure de l'enfoncement.

La première source d'erreur est due au fait qu'en pratique, l'enfoncement, qui correspond au déplacement du point le plus bas de l'indenteur, n'est pas mesuré directement mais déduit d'un déplacement mesuré dans le meilleur des cas entre l'indenteur et l'échantillon. Différentes solutions plus ou moins satisfaisantes ont été trouvées. La plupart des solutions intègre dans la valeur mesurée des déplacements liés aux déformations de certains éléments du bâti ou des déplacements dus à des défauts géométriques du banc d'essai.

La seconde source d'erreur est due à l'utilisation d'indenteurs du commerce, prévus initialement pour déterminer la dureté à partir de l'empreinte laissée dans le matériau après application puis retrait d'une charge. Les indenteurs sont constitués d'une pointe en diamant ou en carbure de tungstène, taillée selon une géométrie qui dépend du type d'essai de dureté, sertie et/ou collée dans un support cylindrique en acier, avec une extrémité qui dépend du mode de fixation sur le banc d'essai. Le sertissage met en contact deux surfaces qui ne s'épousent jamais suffisamment bien pour éviter les déplacements à l'interface entre la pointe et son support. Les déplacements sont toujours assez faibles mais jamais négligeables au regard des grandeurs très faibles mises en jeu. Les caractéristiques géométriques des surfaces (incluant la rugosité) en contact étant inconnues de l'utilisateur, aucune modélisation ne peut être faite pour déterminer les déplacements correspondant au rapprochement de la pointe vers son support au cours de l'essai.

En conclusion, ces deux sources d'erreur ne permettent pas d'assimiler le déplacement mesuré à l'enfoncement réel de l'indenteur. Or la connaissance de l'enfoncement réel est indispensable pour déterminer les caractéristiques mécaniques du matériau. Par exemple on peut déterminer la dureté H du matériau à partir de l'enfoncement correspondant à la charge maxi appliquée. On peut également déterminer le module réduit E* selon la méthode d'Oliver et Pharr en exploitant la pente (dF/dh) de la courbe F(h) au début du déchargement [1]. Plusieurs méthodes permettent également de déterminer la limite d'élasticité du matériau et un ou deux paramètres d'écrouissage. Ces méthodes s'appuient sur certaines grandeurs extraites de la courbe d'indentation comme la courbure, l'énergie élastique, l'énergie plastique, l'énergie totale, ou le rapport énergie plastique sur énergie totale. Toutes ces grandeurs dépendent de l'enfoncement h. La première solution retenue par les constructeurs de dispositifs d'indentation consiste à proposer des systèmes à bâtis très rigides donc souvent massifs et non portables qui se déforment peu pendant le test d'indentation. Les pièces à tester doivent donc être amenées sur les dispositifs ce qui limite les champs d'applications aux pièces faciles à manipuler et provenant d'environnement non toxique. Pour s'affranchir complètement des déformations parasites, la solution complémentaire proposée par les constructeurs consiste à appliquer une correction globale calculée à partir d'une courbe de calibration non universelle obtenue grâce à des essais sur des matériaux étalons. Cette correction globale est coûteuse en essais d'étalonnage, non transposables d'un matériau à un autre et généralement implémentée dans le logiciel d'interprétation des mesures et non accessible à l'utilisateur.

Le dispositif selon l'invention permet de remédier à ces inconvénients. Il bénéficie d'une nouvelle disposition des capteurs de déplacements et d'un indenteur monobloc qui permettent de s'affranchir de l'utilisation d'un bâti rigide et massif, ce qui lui confère la propriété de portabilité et ouvre de nouveaux champs d'applications à l'essai d'indentation comme celui des pièces massives ou provenant d'environnement toxique. L'invention s'appuie sur un montage astucieux constituant une tête d'indentation mise au point pour mesurer l'enfoncement réel de l'indenteur en s'affranchissant des déformations des éléments situés au-dessus de l'indenteur et au-dessous de la pièce testée.

Pour cela, le dispositif d'essais d'indentation continue ou instrumentée selon l'invention est énoncé dans la revendication 1.

Dans un perfectionnement, le dispositif selon l'invention comporte une embase inférieure amovible montée sur un fourreau du support extérieur, ladite embase amovible étant montée entre ledit fourreau et la surface de la pièce à tester. Avantageusement, l'embase inférieure est de forme complémentaire de la pièce à tester, l'indenteur coulissant selon un axe orthogonal par rapport à la surface du matériau à tester dans ladite embase inférieure. De préférence, l'embase inférieure est transparente. Afin de garantir un bon maintien du dispositif sur une pièce à tester métallique, l'embase inférieure peut comporter un élément magnétique.

Le piston selon l'invention est de préférence piloté en translation, c'est-à-dire en coulissement dans le support extérieur, par la main d'un utilisateur, un bras manipulateur, une colonne mécanique ou encore un robot. Dans un mode de réalisation, le dispositif selon l'invention est monté sur un élément mécanique automatisé dans le cadre d'une chaîne de fabrication. Dans un perfectionnement, l'invention porte sur un dispositif d'essais d'indentation selon l'énoncé de la revendication 11 comportant un système automatisé du type robot, bras mécanique ou autre sur lequel est installé un piston.

Le moyen d'amortissement et de régulation de l'effort appliqué au piston peut être par exemple une bague élastique, un ressort, ou tout autre amortisseur régulateur de vitesse afin d'avoir une acquisition régulière de l'effort appliqué au piston.

Dans un mode préférentiel, le dispositif selon l'invention comporte une combinaison de systèmes de mesure de déplacement répartis de manière équilibrée autours de l'indenteur, par exemple trois systèmes de mesure de déplacement disposés en triangle équilatéral autour de l'indenteur.

Avantageusement, le dispositif selon l'invention est dépourvu de bâti massif, c'est-à-dire qu'il est transportable et utilisable à l'aide d'une seule main.

Le dispositif selon l'invention peut être réalisé dépourvu de système de mesure de l'effort, par exemple dans le cadre d'un test de dureté.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en coupe longitudinale du dispositif selon l'invention ;
- La figure 2 représente une vue en coupe transversale du dispositif selon l'invention au niveau de l'indenteur ;
- La figure 3 représente une vue en coupe longitudinale du dispositif de l'invention relié à un élément d'analyse extérieur ;
- La figure 4 représente une vue schématique d'un dispositif selon l'invention intégré à un système d'analyse extérieur ;

Une liste des références utilisées ci-après dans la description et dans les figures qui s'y rattachent est donnée ci après :
1. Bouton
2. Moyen de régulation du déplacement et de l'effort
3. Entretoise d'adaptation
4. Ajustement glissant ou glissière à bille
5. Système de mesure d'effort
6. Support d'indenteur
7. Système de mesure de déplacement
8. Support du système de mesure de déplacement 7
9. Indenteur monobloc
10. Embase inférieure
11. Fourreau
12. moyen de blocage
13. Flasque supérieur
14. Tête d'indentation
15. Piston
16. Support extérieur
17. Extrémité inférieure de l'indenteur 9
18. Section supérieure du bouton 1
19. Section inférieure du bouton 1
20. Axe de coulissement du piston 15
21. Section supérieure de l'entretoise 3
22. Evidement de la section inférieure 19 du bouton 1
23. Section inférieure de l'entretoise 3
24. Pointe de l'indenteur 9 monobloc
25. Corps de l'indenteur 9 monobloc
26. Distance séparant deux systèmes de mesure de déplacement 7 consécutifs
27. Lumière dans le fourreau 11
28. Câble de connexion
29. Boîtier électronique
30. Ordinateur

Dans la suite de la description le terme « longitudinal » désigne le coté le plus long d'un élément et « latéral » le coté le moins long d'un élément. La « hauteur », le qualificatif « supérieur » et le qualificatif « inférieur » d'un élément sont utilisés dans le cadre d'une installation normale du dispositif, c'est-à-dire relatif à une notion verticale par rapport à un sol plat horizontal sur lequel serait posé le dispositif selon l'invention, l'indenteur étant alors en vis-à-vis du sol. Les termes « distal » et « proximal » seront utilisés afin de respectivement caractériser une partie éloignée du corps ou d'une liaison principale de l'élément caractérisé ou au contraire proche dudit corps ou liaison principale de l'élément caractérisé.

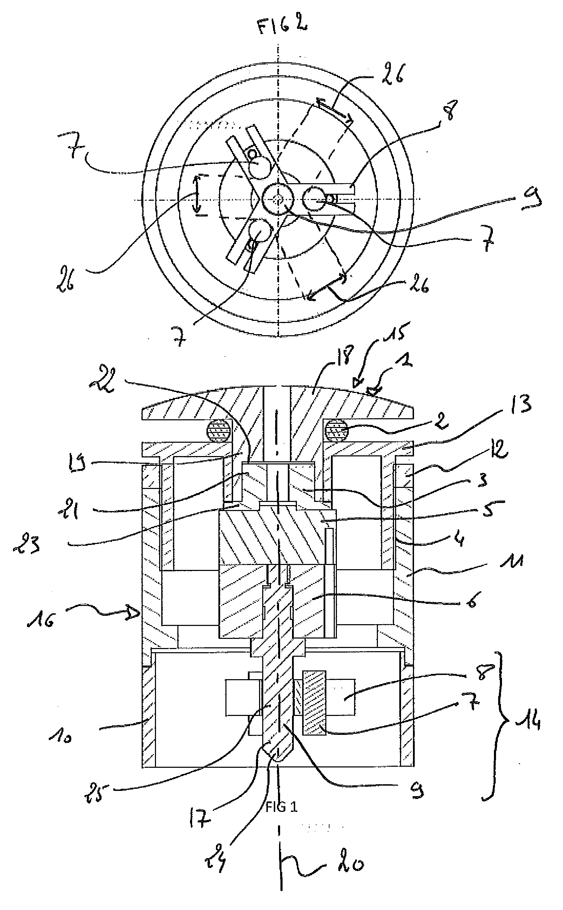

La figure 1 représente un vue en coupe longitudinale du dispositif selon l'invention.

Le dispositif selon l'invention comporte un support extérieur 16 dans lequel est monté coulissant un piston 15 à l'extrémité duquel est montée une tête d'indentation 14. En utilisation, le dispositif est placé ou fixé sur un matériau à tester, la tête d'indentation 14 en vis-à-vis sans contact du matériau à tester. Un coulissement du piston 15 dans le support extérieur 16 en direction du matériau entraîne l'application d'une poussée de la tête d'indentation 14 sur le matériau, typiquement l'enfoncement nécessaire au test d'indentation.

La tête d'indentation 14 est constituée d'un indenteur 9 réalisé monobloc, par exemple sous la forme d'un indenteur 9 en carbure de tungstène monobloc 9 usiné dans la masse. Un support 8 de système de mesure de déplacement est fixé sur l'indenteur 9. Un tel support 8 de système de mesure de déplacement sert de point de montage pour un système de mesure de déplacement 7. Un tel système de mesure de déplacement 7 est par exemple un palpeur 7 ou un capteur 7 de déplacement apte à déterminer le déplacement de l'indenteur 9 et plus particulièrement l'enfoncement dudit indenteur 9 dans le matériau à tester. La suite de la description fait référence à un système de mesure de déplacement 7 sous la forme d'un capteur 7 pour des raisons pratiques, étant entendu qu'un tel capteur 7 est donné à titre d'exemple et que l'invention porte sur tout système de mesure de déplacement 7.

De préférence, trois capteurs 7 sont montés sur ledit support 8 de capteur. Avantageusement, ces trois capteurs 7 sont disposés à 120° sur le support 8 de capteur autour de l'indenteur 9. Un nombre variable de capteurs 7 peut être monté sur le support 8, lesdits capteurs 7 étant répartis sur le support 8 de manière équilibrée c'est-à-dire que la distance 26 séparant deux capteurs 7 consécutifs autour de l'indenteur 9 est identique pour l'ensemble desdits capteurs 7 installés sur le support 8. Afin de garantir une homogénéité des résultats obtenus par la combinaison de capteurs 7, lesdits capteurs 7 sont situés à égale distance de l'axe de coulissement de l'indenteur 9, c'est-à-dire de l'axe de coulissement 20 du piston 15. Les capteurs 7 sont placés au plus près de l'extrémité inférieure 17 de l'indenteur 9. De tels capteurs 7 sont des capteurs de déplacement 7 aptes à déterminer le déplacement effectué par l'indenteur 9 lors d'un test d'indentation. De tels capteurs 7 sont de tout type connu de l'homme de l'art et ont de préférence tous leurs éléments constitutifs montés sur le support 8 de capteur.

**Le piston** 15 est ici constitué de:
- un bouton 1 qui permet à l'utilisateur d'appliquer l'effort nécessaire au test d'indentation avec la paume de la main. Le bouton 1 comporte une section supérieure 18 poussoir complémentaire d'un élément de poussée extérieur comme une main d'un utilisateur ou un bras mécanique. Le bouton 1 comporte aussi une section inférieure 19 cylindrique circulaire ayant une direction de développement identique à un axe de coulissement 20 du piston 15 dans le support extérieur 16;
- l'entretoise d'adaptation 3 qui est une pièce d'assemblage entre le système de mesure d'effort 5 et la section inférieure 19 du bouton 1. L'entretoise d'adaptation 3 est de forme complémentaire d'une part à la section inférieure 19 du bouton 1 et d'autre part d'un système de mesure d'effort 5. Une telle entretoise 3 permet de transmettre au système de mesure d'effort 5 un effort appliqué sur le bouton 1. Dans l'exemple décrit sur la figure 1, l'entretoise 3 comporte une section supérieure 21 circulaire complémentaire d'un évidement 22 de la section inférieure 19 du bouton 1 afin d'assurer la bonne coopération et transmission des efforts entre ledit bouton 1 et l'entretoise 3, ladite section supérieure 21 de l'entretoise 3 étant montée dans ledit évidement 22. L'entretoise 3 comporte par ailleurs une section inférieure 23 circulaire complémentaire et coopérant avec le système de mesure d'effort 5 d'une part et de la section inférieure 19 du bouton 1 d'autre part, assurant une bonne transmission des efforts entre l'entretoise 3 et le système de mesure d'effort 5.
- le système de mesure d'effort 5. Un tel système de mesure d'effort, par exemple un capteur d'effort, analyse la force appliquée lors du test d'indentation. Les résultats d'une telle analyse peuvent être envoyés à une unité de calcul afin, par exemple, de déterminer la courbe F(h) ou tout autre information mécanique sur le matériau testé prévue par ladite unité de calcul.
- Le support d'indenteur 6, sur lequel est fixée la tête d'indentation 14, qui assure la liaison rigide entre l'indenteur 9 et le système de mesure d'effort 5. Le support d'indenteur 6 est directement monté sur le système de mesure d'effort 5 par complémentarité des formes respectives dudit support d'indenteur 6 et dudit système de mesure d'effort 5, assurant la retransmission des efforts captés par le système de mesure d'effort 5 à la tête d'indentation 14.
- la tête d'indentation 14 sus mentionnée, constituée des pièces repérées 7, 8 et 9

Le **support** extérieur 16 est avantageusement constitué de 4 parties :
- le flasque supérieur 13 qui assure la liaison en coulissement (liaison pivot glissant) entre le piston mobile 15 et le support extérieur 16 immobile pendant l'essai. Ce coulissement est possible grâce à un ajustement glissant juste repéré 4 qui pourrait être remplacé par une douille à billes ou tout autre système permettant le coulissement guidé du piston 15 dans le support extérieur 16. Typiquement, le bouton 1 du piston 15 est inséré coulissant dans le flasque 13.
- le fourreau 11 taraudé dans sa partie supérieure afin de réaliser la liaison vis-écrou, avec le flasque supérieur 13, qui permet le réglage de la hauteur de l'indenteur 9 par rapport à la surface du matériau à tester. Le flasque supérieur 13 comporte sur sa surface extérieure un filetage coopérant par vissage avec le fourreau 11. Selon que le flasque 13 est plus ou moins vissé sur le fourreau 11, le piston 15 est plus ou moins avancé dans ledit fourreau 11 et donc la tête d'indentation 14 est plus ou moins proche de la surface de la pièce à tester lors de l'installation du dispositif.
- la bague contre-écrou moletée 12, qui sert à verrouiller la position relative entre le flasque supérieur 13 et le fourreau 11. Typiquement, la bague 12 bloque par serrage le flasque 13 dans le fourreau 11, le serrage de la bague 12 empêchant le flasque 13 d'être vissé ou dévissé du fourreau 11 et bloquant donc les positions relative du flasque 13 par rapport au fourreau 11,
- l'embase inférieure 10 qui peut être éventuellement en matériau transparent, de type plexiglass pour viser le point à tester, est posée sur la pièce au cours du test. L'embase 10 est située entre le fourreau 11 et la pièce à tester. Cette embase interchangeable peut avoir une forme adaptée à la pièce à tester. L'interchangeabilité peut être obtenue par tout moyen de montage connu de l'homme de l'art, par exemple l'embase 10 comportant sur sa partie supérieure un filetage coopérant avec un taraudage prévu sur le fourreau 11. Afin de s'adapter à la pièce à tester, la forme de l'embase 10 peut varier tant dans sa hauteur, c'est-à-dire selon l'axe de coulissement du piston, que dans la forme de sa partie inférieure, de manière à s'adapter et coopérer au mieux avec la pièce à tester. A titre d'exemple :
   ∘ Pour une pièce à tester de petite taille, l'embase 10 peut être une buse conique pour prendre appui sur une surface réduite de la pièce, la partie inférieure de l'embase 10 en contact avec la pièce à tester ayant le plus petit diamètre de ladite embase 10.
   ∘ Pour une pièce à tester cylindrique, l'embase 10 peut avoir dans sa partie inférieure une rainure en forme de « V » pour faciliter la mise en position, ladite rainure en « V » épousant la forme extérieure de la pièce cylindrique.
   ∘ Pour une surface complexe d'échantillon, la partie inférieure de l'embase 10 peut être en forme de tulipe afin d'assurer un contact d'appui en 3 points.
   ∘ Pour une pièce métallique, l'embase peut être magnétique pour maintenir la position du dispositif pendant l'essai d'indentation.

Ce mode de réalisation du support extérieur 16 est le mode de réalisation préférentiel du dispositif selon l'invention, l'invention portant sur un dispositif pouvant comporter toutes ces caractéristiques seules ou en combinaison. Il est ainsi possible de réaliser l'invention avec un fourreau 11 intégrant le flasque 13, le piston 15 coulissant directement dans le fourreau 11. De même, l'embase 10 et le fourreau 11 peuvent être réalisés en une seule pièce.

Le support extérieur 16 simple et léger qui tient dans la main, assure la translation guidée, ou coulissement, du piston 15 vers le matériau à tester à l'aide du flasque 13. Ce mouvement de translation peut être piloté par la main de l'utilisateur, un bras ou une colonne mécanique ou un robot et est suffisant pour réaliser un essai d'indentation continue. Ce mouvement est limité par la présence d'un moyen d'amortissement et de régulation 2 du déplacement et de l'effort. Ce moyen d'amortissement et de régulation 2 se présente par exemple sous la forme d'une bague élastique 2, d'un ressort 2 ou de tout autre moyen d'amortissement et de régulation de l'effort et de l'enfoncement apte à assurer une acquisition régulière de l'effort appliqué au piston. Un tel moyen 2 est particulièrement utile dans le cadre d'un effort appliqué par le bras d'un utilisateur, un tel effort étant alors rarement appliqué de manière homogène et régulière durant le déplacement du piston. Un tel moyen d'amortissement et de régulation 2 peut être situé entre le support extérieur 16 et le piston 15, typiquement entre le flasque 13 et la section supérieure 18 du bouchon 1 ou encore au niveau de l'ajustement glissant 4. Ce moyen de régulation 2 permet de maintenir la tête d'indentation 14 sans contact avec la pièce tester lors de l'installation du dispositif sur une pièce à tester.

En l'absence de ce moyen d'amortissement et de régulation 2 et afin de garantir au piston 15 une liberté en coulissement suffisante pour réaliser le test, seul un contact avec appui entre la pièce à tester et la tête d'indentation 14 permettrait de maintenir le piston suffisamment en retrait dans le support extérieur 16 pour assurer la liberté de coulissement nécessaire au déplacement de l'indenteur 9 en toute situation. Cependant, un tel contact engendrerait une perte de données importante, ledit contact pouvant engendrer à lui seul des déformations ou le marquage de la pièce à tester. Par exemple dans le cadre d'un test sur un élément mousseux, le simple poids du piston 15 suffit à engendrer un enfoncement de la tête d'indentation 14 dans ledit élément mousseux. Il est donc nécessaire de conserver un écart entre la tête d'indentation 14 et la pièce à tester tout en conservant une liberté de coulissement du piston 15 dans le support extérieur 16 suffisante pour réaliser le test. Le dispositif selon l'invention permet cela par la présence dudit moyen d'amortissement et de régulation 2.

La figure 2 représente une vue en coupe transversale du dispositif selon l'invention au niveau de l'indenteur.

L'indenteur 9, réunissant une pointe 24, réalisée selon toute géométrie adaptée au test, et un corps 25 dudit indenteur 9, est usiné dans un bloc de carbure de tungstène. Il n'y a donc aucun déplacement entre la pointe 24 et le corps 25 de l'indenteur 9. L'indenteur 9 peut se déformer élastiquement sous charge mais les déplacements correspondants sont très faibles car le carbure de tungstène est très rigide (E=600 GPa). Cependant le déplacement entre le support 8 des capteurs et le point le plus bas de l'indenteur 9 est calculable facilement à partir du module d'Young, de la géométrie simple de l'indenteur 9 et du rayon de contact indenteur-matériau testé [2].

Le dispositif selon l'invention comporte au moins un palpeur 7 ou capteur de déplacement 7 de la tête d'indentation 14, par exemple de type capteur capacitif. Selon l'invention, ce capteur 7 est monté sur un support 8 de capteur. Le support 8 de capteur selon l'invention est monté directement sur l'indenteur 9. Le capteur 7 comporte de préférence tous ses éléments aptes à déterminer le déplacement de l'indenteur 9 installés sur ledit support 8 de capteur, aucun élément installé par exemple sur le support extérieur 16 n'intervenant dans la détermination du déplacement de l'indenteur 9. Le capteur 7 est solidaire en déplacement de l'indenteur 9. La réalisation monobloc de l'indenteur 9 associée à l'installation du capteur 7 directement sur l'indenteur 9 assure la détermination précise et sans perturbations du déplacement réel de l'indenteur 9 par rapport à la pièce à tester, c'est-à-dire de l'enfoncement de l'indenteur 9 dans ladite pièce à tester.

De préférence, le support 8 de capteur permet l'installation d'une combinaison de capteurs 7. Par exemple, trois capteurs 7 de déplacement sont installés sur le support 8 de capteur de manière solidaire en déplacement de l'indenteur 9. Les capteurs 7 sont répartis sur le support 8 de capteur de manière équilibrée autour de l'indenteur 9, c'est-à-dire que la distance 26 séparant deux capteurs 7 consécutifs autour de l'indenteur 9 est la même pour tous les capteurs 7. Ainsi, dans le cas ou trois capteurs 7 sont montés sur le support 8 de capteur, les trois capteurs 7 de déplacement forment un triangle équilatéral au centre duquel est positionné l'indenteur monobloc 9. De plus, chaque capteur 7 est monté sur le support 8 à égale distance de l'axe de coulissement de l'indenteur 9.

Les capteurs 7 viennent palper la surface du matériau testé. Les déformations des éléments situés sous l'échantillon à tester et au-dessus de l'indenteur 9 peuvent entraîner une légère orientation de l'axe de l'indenteur 9 et/ou du support de l'échantillon à tester. Les capteurs 7 ne fournissent alors pas les mêmes mesures mais la moyenne des trois mesures correspond au rapprochement réel de l'indenteur 9 vers le matériau testé. Ainsi, les déformations du support extérieur 16, du piston 15 et du support de l'échantillon ne perturbent pas le système de mesure proposé.

Le montage simple et astucieux présenté ci-dessus s'affranchit des déformations des éléments des bancs d'essais d'indentation couramment utilisés perturbant habituellement la mesure de l'enfoncement réel de l'indenteur 9.

L'invention permet de s'affranchir des déformations au-dessus de l'indenteur 9 par la solidarisation en déplacement du ou des capteurs 7 avec l'indenteur 9 réalisé de manière monobloc et au-dessous de l'échantillon par la présence de plusieurs capteurs 7 de déplacement permettant une homogénéisation des résultats de déplacement de l'indenteur obtenus par les capteurs 7, contrairement à la conception habituelle des bancs d'indentation continue qui nécessitent des bâtis rigides pour minimiser l'effet des déformations. En conséquence, un corps mécanique simple assurant la translation guidée du piston 15 comportant la tête d'indentation est suffisant pour réaliser un essai d'indentation continue. L'encombrement de l'invention est si réduit que le système tient dans la main et mérite le terme « portatif ». Ce n'est qu'un exemple parmi ceux qui peuvent être réalisés avec cette tête d'indentation.

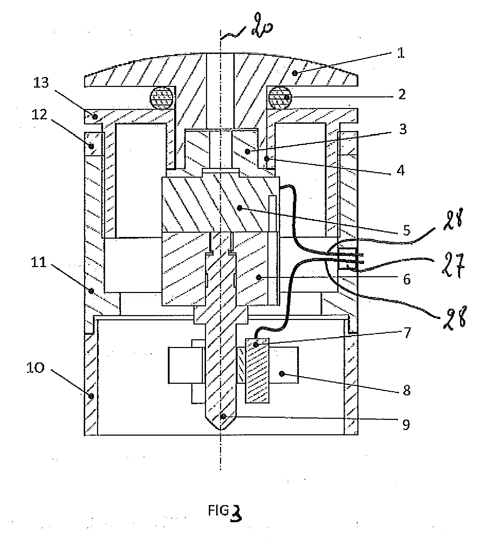

La figure 3 représente une vue en coupe longitudinale du dispositif de l'invention relié à un élément d'analyse extérieur

Dans cet exemple de réalisation, une lumière 27 est réalisée dans le fourreau 11 afin de permettre le passage de câbles 28 reliés à un élément d'analyse extérieur. Ces câbles 28 sont d'une part reliés audit élément extérieur, et d'autre part aux différents capteurs du dispositif selon l'invention, c'est-à-dire le système de mesure d'effort 5 et le ou les capteurs de déplacement 7.

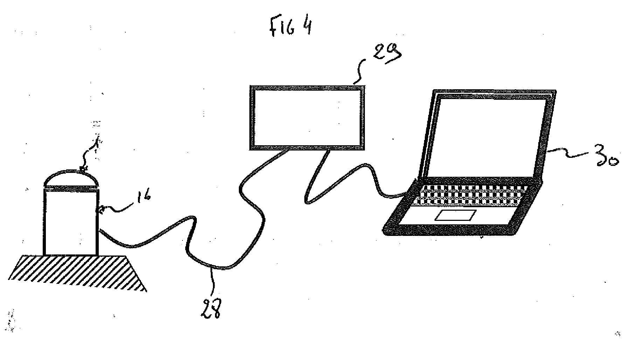

La figure 4 représente une vue schématique d'un dispositif selon l'invention intégré à un système d'analyse extérieur.

De préférence, le dispositif d'essai d'indentation continue est relié à un boitier électronique 29 permettant de convertir et transmettre les grandeurs mesurées en continu à un ordinateur 30. Un tel ordinateur 30 comporte les programmes d'analyse et de calcul des résultats. Un tel ordinateur peut aussi comporter un programme de contrôle du dispositif.

De plus, le dispositif selon l'invention peut aussi être utilisé pour un test de dureté, le dispositif selon l'invention étant alors simplement réalisé avec une liaison directe entre la tête d'indentation 14 et le bouton 1 et/ou l'entretoise d'adaptation 3. Une simple mesure de l'enfoncement après application d'une charge, déterminée préalablement, sur le bouton permettant d'obtenir les résultats d'un tel test de dureté.

Par ailleurs, dans le cadre d'un robot ou bras mécanique, le piston 15 peut être directement guidé par ledit robot ou bras mécanique, le dispositif selon l'invention n'ayant alors pas besoin de comporter le support extérieur 16.

### Applications industrielles possibles

Ce dispositif ainsi réalisé permet de mesurer in situ les caractéristiques mécaniques des matériaux telles que la dureté, le module d'Young, la limité d'élasticité, l'exposant d'écrouissage, ...

### Références

Brevets N° FR7606798: mesureur de dureté actionnable à la main
Brevet N°WO2006/136038 A1 : Apparatus for Hardness Measurement by impact
Brevet N°WO03/056303 A1 : Hardness measuring device comprising a housing and a penetration body, in particular a manuel device.
[1] Oliver, W.C., Pharr, G.M., 1992. An improved technique for determining hardness and elastic modulus using load and displacement sensing indentation experiments. J. Mat. Research 7 (6), 1564-1583.
[2] Collin, J-M., Mauvoisin, G., El Abdi, R., An experimental method to determine the contact radius changes during a spherical instrumented indentation, Mechanics of Materials (2007), doi : 10.1016/j.mechmat.2007.10.002

## Revendications

1. Dispositif d'essais d'indentation continue ou instrumentée comportant un support extérieur (16), un piston (15) monté coulissant dans ledit support extérieur (16) et comportant un indenteur (9), un moyen d'amortissement et de régulation (2) de l'effort appliqué au piston, une combinaison de systèmes de mesure de déplacement (7) et un système de mesure d'effort (5), où l'indenteur (9) est monobloc usiné dans la masse, où ledit piston (15) comporte la combinaison de systèmes de mesure de déplacement (7) répartis de manière équilibrée autour de l'indenteur (9), où le piston (15) comporte un bouton (1) d'application d'effort, où le piston (15) comporte d'une part une entretoise (3) de transmission de l'effort appliqué sur le bouton (1) au système de mesure d'effort (5), et d'autre part un support d'indenteur (6) monté directement sur le système de mesure d'effort (5), ledit support d'indenteur (6) assurant la liaison rigide entre l'indenteur (9) et ledit système de mesure d'effort (5), un support (8) de système de mesure de déplacement étant monté directement sur ledit indenteur (9), chaque système de mesure de déplacement (7) étant fixé sur ledit support (8) de système de mesure de déplacement et solidaire en déplacement dudit indenteur (9) monobloc, de manière que chaque système de mesure de déplacement (7) soit solidaire en déplacement de l'indenteur (9).

2. Dispositif selon la revendication 1 **caractérisé en ce qu'**il comporte une embase inférieure (10) amovible montée sur un fourreau (11) du support extérieur (16), ladite embase amovible étant montée entre ledit fourreau et la surface de la pièce à tester.

3. Dispositif selon la revendication 2 **caractérisé en ce que** l'embase (10) est de forme complémentaire de la pièce à tester, l'indenteur coulissant selon un axe orthogonal (20) par rapport à la surface du matériau à tester

4. Dispositif selon l'une des revendications précédentes **caractérisé en ce que** le piston est configuré pour être piloté en translation par la main d'un utilisateur, un bras manipulateur, une colonne mécanique ou encore un robot.

5. Dispositif selon l'une des revendications précédentes **caractérisé en ce que** le moyen d'amortissement et de régulation de l'effort appliqué au piston est une bague élastique (2), un ressort, ou tout autre moyen d'amortissement et de régulation de l'effort et de l'enfoncement.

6. Dispositif selon l'une des revendications précédentes **caractérisé en ce qu'**il comporte trois systèmes de mesure de déplacement (7) disposés en triangle équilatéral autour de l'indenteur (9).

7. Dispositif d'essais d'indentation continue ou instrumentée selon l'une des revendications précédentes **caractérisé en ce qu'**il est dépourvu de bâti massif.

8. Dispositif selon l'une des revendications précédentes **caractérisé en ce qu'**il est monté sur un élément mécanique automatisé dans le cadre d'une chaîne de fabrication.

9. Dispositif d'essais d'indentation continue ou instrumentée selon l'une des revendications 2 à 8 **caractérisé en ce que** l'embase inférieure (10) est transparente.

10. Dispositif d'essais d'indentation continue ou instrumentée selon l'une des revendications 2 à 9 **caractérisé en ce que** l'embase inférieure (10) comporte un élément magnétique.

11. Dispositif d'essais d'indentation continue ou instrumentée comportant un système automatisé de déplacement associé à un piston (15), ledit piston (15) comportant un indenteur (9), une combinaison de systèmes de mesure de déplacement (7) et un système de mesure d'effort (5), où l'indenteur (9) est monobloc usiné dans la masse, où ledit piston (15) comporte la combinaison de systèmes de mesure de déplacement (7) répartis de manière équilibrée autour de l'indenteur (9), où le piston (15) comporte de plus un bouton (1) d'application d'effort, où le piston (15) comporte d'une part une entretoise (3) de transmission de l'effort appliqué sur le bouton (1) au système de mesure d'effort (5), et d'autre part un support d'indenteur (6) monté directement sur le système de mesure d'effort (5), ledit support d'indenteur (6) assurant la liaison rigide entre l'indenteur (9) et ledit système de mesure d'effort (5), un support (8) de système de mesure de déplacement étant monté directement sur ledit indenteur (9), chaque système de mesure de déplacement (7) étant fixé sur ledit support (8) de système de mesure de déplacement et solidaire en déplacement dudit indenteur (9) monobloc, de manière que chaque système de mesure de déplacement (7) soit solidaire en déplacement de l'indenteur (9).

## Patentansprüche

1. Testvorrichtung für eine kontinuierliche oder instrumentierte Härtemessung mit einer externen Halterung (16), einem, in der externen Halterung (16) verschiebbar gelagerten Kolben (15), der einen Stößel (9), ein Dämpf- und Reguliermittel (2) für die am Kolben angesetzte Belastung, eine Kombination von Messsystemen der Bewegung (7) und ein Messsystem der Belastung (5) umfasst, bei der der Stößel (9) einteilig und aus einem Block gegossen ist, bei der der Kolben (15) die Kombination von Messsystemen der Bewegung (7), die ausgeglichen um den Stößel (9) verteilt sind, umfasst, bei der der Kolben (15) einen Knopf (1) für die Anwendung der Belastung umfasst, bei der der Kolben (15) einerseits ein Distanzstück (3) für die Übertragung der auf den Knopf (1) angewendeten Belastung auf das Messsystem der Belastung (5) und andererseits eine Stößelhalterung (6) umfasst, die direkt auf das Messsystem der Belastung (5) montiert ist, wobei die Stößelhalterung (6) die starre Verbindung zwischen dem Stößel (9) und dem Messsystem der Belastung (5) gewährleistet, wobei eine Halterung (8) des Messsystems der Bewegung direkt auf den Stößel (9) montiert ist, wobei jedes Messsystem der Bewegung (7) auf der Halterung (8) des Messsystems der Bewegung fixiert ist und sich zusammen mit dem einteiligen Stößel (9) bewegt, sodass sich jedes Messsystem der Bewegung (7) zusammen mit dem Stößel (9) bewegt.

2. Vorrichtung nach Anspruch 1, **dadurch gekennzeichnet, dass** sie ein lösbares Unterteil (10) umfasst, das auf eine Buchse (11) der externen Halterung (16) montiert ist, wobei das lösbare Unterteil zwischen der Buchse und der Oberfläche des zu testenden Werkstücks montiert ist.

3. Vorrichtung nach Anspruch 2, **dadurch gekennzeichnet, dass** das Unterteil (10) eine zum testenden Werkstück komplementäre Form aufweist, wobei der Stößel entlang einer zur Oberfläche des zu testenden Materials orthogonalen Achse (20) gleitet.

4. Vorrichtung nach einem der vorausgehenden Ansprüche, **dadurch gekennzeichnet, dass** der Kolben so gestaltet ist, dass er bei der Verschiebung von der Hand eines Anwenders, von einem Betätigungshebel, einer mechanischen Säule oder auch von einem Roboter gesteuert werden kann.

5. Vorrichtung nach einem der vorausgehenden Ansprüche, **dadurch gekennzeichnet, dass** das Mittel zum Dämpfen und Regulieren der auf den Kolben angewendeten Belastung ein Federring (2), eine Feder oder ein anderes Mittel zum Dämpfen und Regulieren der Belastung und des Eindrückens ist.

6. Vorrichtung nach einem der vorausgehenden Ansprüche, **dadurch gekennzeichnet, dass** sie drei Messsysteme der Bewegung (7) umfasst, die in einem gleichseitigen Dreieck um den Stößel (9) angeordnet sind.

7. Testvorrichtung für eine kontinuierliche oder instrumentierte Härtemessung nach einem der vorausgehenden Ansprüche, **dadurch gekennzeichnet, dass** sie kein massives Gestell aufweist.

8. Vorrichtung nach einem der vorausgehenden Ansprüche, **dadurch gekennzeichnet, dass** sie auf ein automatisiertes mechanisches Element im Rahmen einer Fertigungsstraße montiert ist.

9. Testvorrichtung für eine kontinuierliche oder instrumentierte Härtemessung nach den Ansprüchen 2 bis 8, **dadurch gekennzeichnet, dass** das Unterteil (10) durchsichtig ist.

10. Testvorrichtung für eine kontinuierliche oder instrumentierte Härtemessung nach den Ansprüchen 2 bis 9, **dadurch gekennzeichnet, dass** das Unterteil (10) ein magnetisches Element umfasst.

11. Testvorrichtung für eine kontinuierliche oder instrumentierte Härtemessung mit einem automatisierten und mit dem Kolben (15) verbundenen Bewegungssystem, wobei der Kolben (15) einen Stößel (9), eine Kombination von Messsystemen der Bewegung (7) und ein Messsystem der Belastung (5) umfasst, bei der der Stößel (9) einteilig und aus einem Block gegossen ist, bei der der Kolben (15) die Kombination von Messsystemen der Bewegung (7), die ausgeglichen um den Stößel (9) verteilt sind, umfasst, bei der der Kolben (15) zudem einen Knopf (1) für die Anwendung der Belastung umfasst, bei der der Kolben (15) einerseits ein Distanzstück (3) für die Übertragung der auf den Knopf (1) angewendeten Belastung auf das Messsystem der Belastung (5) umfasst, und andererseits eine Stößelhalterung (6), die direkt auf das Messsystem der Belastung (5) montiert ist, wobei die Stößelhalterung (6) die starre Verbindung zwischen dem Stößel (9) und dem Messsystem der Belastung (5) gewährleistet, wobei eine Halterung (8) des Messsystems der Bewegung direkt auf den Stößel (9) montiert ist, wobei jedes Messsystem der Bewegung (7) auf der Halterung (8) des Messsystems der Bewegung fixiert ist und sich zusammen mit dem einteiligen Stößel (9) bewegt, sodass sich jedes Messsystem der Bewegung (7) zusammen mit dem Stößel (9) bewegt.

## Claims

1. A device for continuous or instrumented indentation testing comprising an exterior support (16), a piston (15) mounted to slide in said exterior support (16) and comprising an indenter (9), a means for damping and regulating (2) the force applied on the piston, a combination of displacement measurement systems (7) and a force measurement system (5), wherein the indenter (9) is made of a single piece that is machined in its mass, wherein said piston (15) comprises the combination of displacement measurement systems (7) distributed in a balanced manner around the indenter (9), wherein the piston (15) comprises a button (1) for the application of force, wherein the piston (15) firstly comprises a spacer (3) for transmitting the force applied on the button (1) to the force measurement system (5), and secondly an indenter support (6) mounted directly on the force measurement system (5), wherein said indenter support (6) provides a rigid connection between the indenter (9) and said force measurement system (5), wherein a support (8) for the displacement measurement system is mounted directly on said indenter (9), wherein each displacement measurement system (7) is fixed to said displacement measurement system support (8) and integral in movement with said single-piece indenter (9), so that each displacement measurement system (7) is integral in movement with the indenter (9).

2. A device according to claim 1 **characterized in that** it comprises a removable lower base (10) that is mounted on a sleeve (11) of the exterior support (16), wherein said removable base is mounted between said sleeve and the surface of the part to test.

3. A device according to claim 2 **characterized in that** the base (10) has a shape that complements the part to test, wherein the indenter slides along an orthogonal axis (20) in relation to the surface of the material to test

4. A device according to any of the preceding claims **characterized in that** the piston is configured so that its displacement is controlled by the hand of a user, a manipulator arm, a mechanical column or a robot.

5. A device according to any of the preceding claims **characterized in that** the means for damping and regulating the force applied to the piston is an elastic ring (2), a spring or any other means for damping and regulating the force and the indentation.

6. A device according to any of the preceding claims **characterized in that** it comprises three displacement measurement systems (7) arranged in an equilateral triangle around the indenter (9).

7. A device for continuous or instrumented indentation testing according to any of the preceding claims **characterized in that** it does not have a solid frame

8. A device according to any of the preceding claims **characterized in that** it is mounted on an automated mechanical element as part of a manufacturing line.

9. A device for continuous or instrumented indentation testing according to any of claims 2 to 8, **characterized in that** the lower base (10) is transparent.

10. A device for continuous or instrumented indentation testing according to any of claims 2 to 9, **characterized in that** the lower base (10) comprises a magnetic element.

11. A device for continuous or instrumented indentation testing comprising an automated displacement system combined with a piston (15), wherein said piston (15) comprises an indenter (9), a combination of displacement measurement systems (7) and a force measurement system (5), wherein the indenter (9) is made of a single piece that is machined in its mass, wheren said piston (15) comprises the combination of displacement measurement systems (7) distributed in a balanced manner around the indenter (9), wherein the piston (15) additionally comprises a button (1) for the application of force, where the piston (15) firstly comprises a spacer (3) for transmitting the force applied on the button (1) to the force measurement system (5), and secondly an indenter support (6) mounted directly on the force measurement system (5), wherein said indenter support (6) provides a rigid connection between the indenter (9) and said force measurement system (5), wherein a support (8) for the displacement measurement system is mounted directly on said indenter (9), wherein each displacement measurement system (7) is fixed to said displacement measurement system support (8) and integral in movement with said single-piece indenter (9), so that each displacement measurement system (7) is integral in movement with the indenter (9).
